# EUROPÄISCHE PATENTSCHRIFT

(11) **EP 2 156 059 B1**
(45) Veröffentlichungstag und Bekanntmachung des Hinweises auf die Patenterteilung: **08.05.2013**
(21) Anmeldenummer: 08760055.7
(22) Anmeldetag: 27.05.2008
(51) Int. Cl.: F15B 9/12, F16H 61/30

(54) **SERVOUNTERSTÜTZUNGSEINRICHTUNG**
POWER BOOSTING DEVICE
SYSTÈME DE SERVO-ASSISTANCE

(30) Priorität: 06.06.2007 DE 102007026421
(43) Veröffentlichungstag der Anmeldung: 24.02.2010
(73) Patentinhaber: ZF Friedrichshafen AG, 88038 Friedrichshafen (DE)
(72) Erfinder: FISCHER, Dieter, 88149 Nonnenhorn (DE); SPÄTH, Klaus, 88276 Berg (DE)
(86) Internationale Anmeldenummer: PCT/EP2008/056457
(87) Internationale Veröffentlichungsnummer: WO 2008/148662

(56) Entgegenhaltungen:
- WO-A-2008/043690
- DE-A1- 19 539 472
- DE-A1- 19 839 855
- DE-A1-102006 006 652
- DE-T5-112005 001 257
- JP-A- 61 295 135
- US-A- 5 947 000

## Beschreibung

Die Erfindung betrifft eine Servounterstützungseinrichtung, insbesondere für eine Schaltvorrichtung eines Kraftfahrzeuggetriebes, nach der im Oberbegriff von Anspruch 1 näher definierten Art, wie sie z.B. aus DE 198 39 855 A1 bekannt ist.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muss er in allen Tätigkeiten, die zum Führen eines Kraftfahrzeuges notwendig sind, so weit wie möglich entlastet und unterstützt werden.

Jeder Kraftfahrer weiß, wie entscheidend die einwandfreie Bedienung des Schaltgetriebes in schwierigen Verkehrssituationen sein kann. Pneumatische Schalthilfen für Nutzfahrzeuge aller Größenordnungen können hier Abhilfe schaffen.

Bisher bekannte Servounterstützungseinrichtungen sind teilweise direkt an das Getriebe angebaut und besitzen eine von außen zugängliche Steuerstange und Kolbenstange. Das Schaltgestänge ist mit der Steuerstange verbunden. Über eine Längsbewegung der Steuerstange wird die Unterstützung aktiviert. Diese Art der Ansteuerung findet man in Verbindung mit zwei Stangen- oder Kabelzugschaltungen. Nachteilig ist hierbei die Abdichtung der Steuer- und Kolbenstange über Faltenbälge und die fehlende Schmierung. Im Lkw ist diese Stelle starker Verschmutzung ausgesetzt. Bei Änderung der Schaltgestängeübersetzung ändert sich auch der Beginn der Servounterstützung bzw. diese muss durch Modifikation des Ventils an die Gestängeübersetzung angepasst werden. Das gleiche gilt auch für Schalthilfen, welche aus einem voneinander getrennten Ansteuerventil und Servozylinder bestehen. Ventil und Zylinder sind über Kugelgelenke mit dem Schalthebel und einer Konsole, welche wiederum am Getriebe befestigt ist, verbunden. Diese Anordnung hat zusätzlich noch den Nachteil, dass sich bei jeder Schaltung die Teile relativ zum Getriebe und Fahrzeugrahmen bewegen und somit die Luftleitungen, mit denen Ventil und Zylinder miteinander verbunden sind, durchscheuern können.

Es sind derartige pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischem Dämpfer den pneumatischen Kraftteil. Eine direkte proportionale Abbildung der Handschaltkraft wird hier nicht erreicht. Die Wege zwischen Steuerteil und Kraftteil sind lang und der Anbau ist platzraubend. Beschädigungen der Druckluftleitungen zwischen Steuerteil und Kraftteil können nicht vermieden werden.

In der nicht vorveröffentlichten Anmeldung der Anmelderin mit dem Aktenzeichen 10 2006 006 652 wird eine Schaltvorrichtung mit Servounterstützungseinrichtung für ein Getriebe eines Fahrzeuges offenbart, die Mittel zum Wählen und zum Schalten einer Gangstufe des Getriebes und eine Steuerstange der Servounterstützungseinrichtung umfasst, auf welche die zu unterstützende Handschaltkraft einwirkt. In der Servounterstützungseinrichtung sind Federelemente vorgesehen, um die auf die Servounterstützungseinrichtung einwirkende Handschaltkraft innerhalb der Servounterstützungseinrichtung vor und/oder während der Erzeugung der Servounterstützungskraft zu verändern und damit die Servounterstützungseinrichtung in ihrer Wirkung zu beeinflussen. Die Federelemente wirken mit Betätigungs- bzw. Ventilkolben zusammen, wodurch eine interne Begrenzung der Servounterstützungskraft realisiert werden kann.

Diese Servounterstützungseinrichtung hat allerdings den Nachteil, dass sich das Konstruktionsprinzip nicht beliebig auf große Betätigungs- bzw. Ventilkolbendurchmesser übertragen lässt, da bei großen Betätigungs- bzw. Ventilkolbendurchmessern die auf die Betätigungs- bzw. Ventilkolben wirkenden Federelemente entsprechend stark ausgelegt werden müssen. Dadurch wird die Belastung der Bauteile, auf die die Federkräfte wirken sehr groß und die Lebensdauer dieser Bauteile wird entsprechend verringert.

Der vorliegenden Erfindung liegt die Aufgabe zugrunde, eine Servounterstützungseinrichtung, insbesondere für eine Schaltvorrichtung eines Kraftfahrzeuggetriebes, aufzuzeigen, mit der eine interne Begrenzung der Servounterstützungskraft auch bei der Verwendung von Ventilkolben mit großen Kolbendurchmessern realisierbar ist und bei der die Belastung der Bauteile, auf die entsprechende Mittel zur Begrenzung der Servounterstützungskraft wirken, gering ist.

Die der Erfindung zugrunde liegende Aufgabe wird durch eine, auch die kennzeichnenden Merkmale des Hauptanspruchs aufweisende, gattungsgemäße Servounterstützungseinrichtung gelöst.

Die erfindungsgemäße Servounterstützungseinrichtung, insbesondere für eine Schaltvorrichtung eines Kraftfahrzeuggetriebes, umfasst eine Steuerstange (20), auf die eine zu unterstützende Handschaltkraft wirken kann, zwei Ventilkolben (40, 48), die an der Steuerstange (20) angeordnet sind und zwischen denen zwei Ventilschieber (38, 46) auf der Steuerstange (20) axial verschiebbar angeordnet sind, die durch ein Federelement (54) axial auseinander gehalten werden und in nicht betätigtem Zustand der Servounterstützungseinrichtung (10) an je einem Ventilsitz anliegen, gekennzeichnet durch zwei Mittel (58, 60) zur Begrenzung der Servounterstützungskraft und weiterhin dadurch gekennzeichnet, dass jeder Ventilkolben (40, 48) aus einem ersten Ventilkolben (42, 50) und einem zweiten Ventilkolben (44, 52) besteht, wobei der erste Ventilkolben (42, 50) jeweils einen der beiden Ventilschieber (38, 46) betätigen kann, jeweils mit einem weiteren Federelement (58, 60) als Mittel zur Begrenzung der Servounterstützungskraft zusammenwirkt und jeweils radial dichtend innerhalb des zweiten Ventilkolbens (44, 52) angeordnet ist. Das weitere Federelement kann beispielsweise in Form einer Spiralfeder oder einer Tellerfeder ausgebildet sein.

In einer besonders bevorzugten Ausführungsform der erfindungsgemä-βen Servounterstützungseinrichtung ist der erste Ventilkolben auf der Steuerstange axial gegen die Federkraft des Federelements bewegbar. In nicht betätigtem Zustand der Servounterstützungseinrichtung wird der erste Ventilkolben durch die Federkraft des Federelements an einen Anschlag der Steuerstange gedrückt. Der Anschlag kann beispielsweise durch einen Sicherungsring realisiert werden, oder einstückig mit der Steuerstange ausgebildet sein. Der erste Ventilkolben ist innerhalb des zweiten Ventilkolbens vorzugsweise derart angeordnet, dass bei einer axialen Bewegung des ersten Ventilkolbens lediglich minimale Reibungskräfte zwischen dem ersten Ventilkolben und dem zweiten Ventilkolben wirken.

In einer vorteilhaften Ausführungsform der erfindungsgemäßen Servounterstützungseinrichtung ist die axiale Bewegung des ersten Ventilkolbens in Richtung des Federelements mittels eines Anschlagelements begrenzbar. Das Anschlagelement kann beispielsweise als Sicherungsring, der fest an der Steuerstange angeordnet ist, oder einstückig mit der Steuerstange ausgebildet sein. In einer vorteilhaften Ausbildung des zweiten Ventilkolbens, kann auch der zweite Ventilkolben als Anschlagelement zur axialen Wegbegrenzung des ersten Ventilkolbens in Richtung des Federelements dienen.

In einer vorteilhaften Ausführungsform der erfindungsgemäßen Servounterstützungseinrichtung ist der zweite Ventilkolben topfförmig ausgebildet und dient einerseits als Anlagefläche für das Mittel zur Begrenzung der Servounterstützungskraft und andererseits als Zylinder für den ersten Ventilkolben.

In einer besonders vorteilhaften Ausführungsform der erfindungsgemä-βen Servounterstützungseinrichtung ist ein zwischen dem ersten Ventilkolben und dem zweiten Ventilkolben wirkendes Dichtmittel in einer Nut am äußeren Durchmesser des ersten Ventilkolbens angeordnet zur Abdichtung des ersten Ventilkolbens zum zweiten Ventilkolben hin. Das Dichtmittel kann beispielsweise als Dichtring ausgebildet sein. Ebenso ist es denkbar, dass das zwischen dem ersten Ventilkolben und dem zweiten Ventilkolben wirkende Dichtmittel auf der Mantelfläche des ersten Ventilkolbens bzw. auf der Zylinderfläche des zweiten Ventilkolbens aufgebracht ist, beispielsweise aufgespritzt.

In einer weiteren Ausführungsform der erfindungsgemäßen Servounterstützungseinrichtung umfasst die Servounterstützungseinrichtung eine Kolbenstange, welche mit Mitteln zum Schalten eines Zahnräderwechselgetriebes zusammenwirkt.

In einer besonders bevorzugten Ausführungsform der erfindungsgemä-βen Servounterstützungseinrichtung ist der zweite Ventilkolben mittels der Steuerstange axial bewegbar und radial dichtend innerhalb der Kolbenstange angeordnet. Der zweite Ventilkolben kann beispielsweise fest auf der Steuerstange angeordnet sein, oder durch ein Anschlagelement und die Federkraft des Federelements zur Begrenzung der Servounterstützungskraft auf der Steuerstange derart fixiert werden, dass er mittels der Steuerstange axial bewegbar ist. Eine feste Verbindung des zweiten Ventilkolbens mit der Steuerstange kann beispielsweise durch eine Pressverbindung, eine Gewindeverbindung mit entsprechender Sicherung oder über mehrere Anschlagelemente realisiert werden.

In einer vorteilhaften Ausführungsform der erfindungsgemäßen Servounterstützungseinrichtung weist der zweite Ventilkolben an seinem äußeren Durchmesser eine Nut auf, in der ein Dichtmittel angeordnet ist zur Abdichtung des zweiten Ventilkolbens zur Kolbenstange hin. Das Dichtmittel kann beispielsweise als Dichtring ausgebildet sein.

In einer weiteren vorteilhaften Ausführungsform der erfindungsgemäßen Servounterstützungseinrichtung weist der zweite Ventilkolben an seinem äußeren Durchmesser eine Nut auf, in der ein Führungsband angeordnet ist zur Führung bzw. Abstützung der Steuerstange innerhalb der Kolbenstange, wodurch auf eine zusätzliche Lagerung der Steuerstange verzichtet werden kann.

Die erfindungsgemäße Schaltvorrichtung, wie beispielsweise eine Schaltvorrichtung für ein Getriebe eines Kraftfahrzeuges, weist die erfindungsgemäße Servounterstützungseinrichtung der zuvor beschriebenen Art auf.

Im Folgenden wird das Grundprinzip der Erfindung, welche mehrere Ausführungsformen zulässt, an Hand einer Zeichnung beispielhaft näher erläutert.

Es zeigen:
- Fig. 1: eine Schaltanlage nach dem Stand der Technik,
- Fig. 2: eine Schnittdarstellung einer Ausführungsform der Servounterstützungseinrichtung und
- Fig. 3: eine Schnittdarstellung einer weiteren Ausführungsform der Servounterstützungseinrichtung.

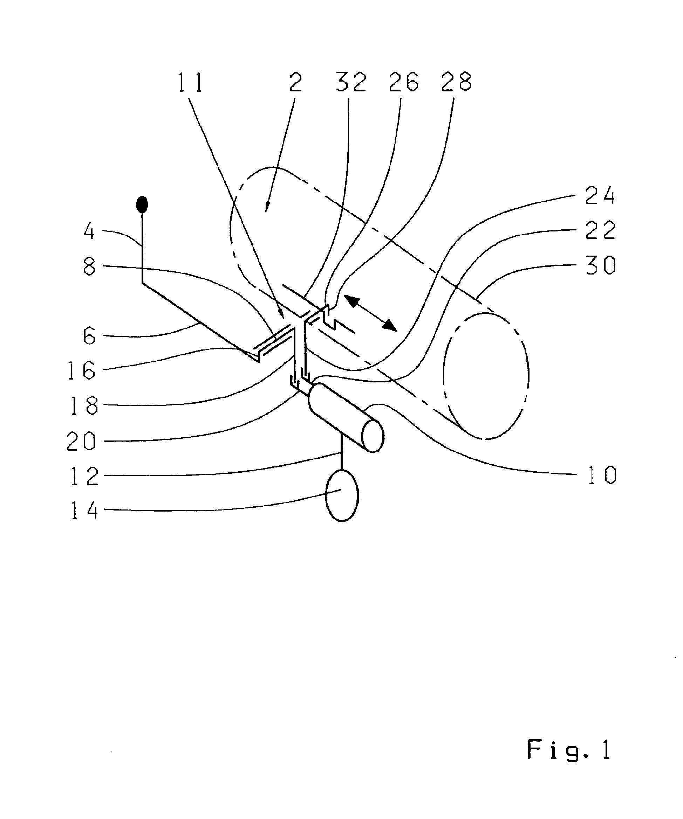

Die Fig. 1 zeigt in einer Skizze eine Schaltanlage 2 eines Kraftfahrzeuges nach dem Stand der Technik. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatische Servounterstützungseinrichtung 10 weist eine Anschlussleitung 12 auf, die zu einem Vorratsbehälter 14 führt, aus dem die pneumatische Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so dass der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

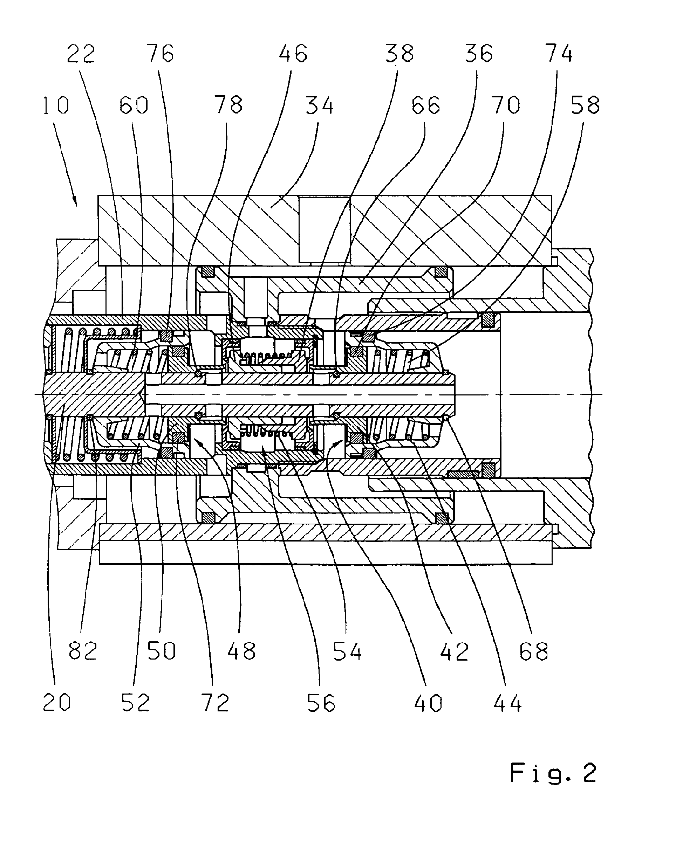

Die Fig. 2 zeigt eine Schnittdarstellung der erfindungsgemäßen Servounterstützungseinrichtung 10. Die Servounterstützungseinrichtung 10 umfasst eine Steuerstange 20 und eine Kolbenstange 22 sowie einen Zylinder 34 und einen Kolben 36. Die Steuerstange 20 der Servounterstützungseinrichtung 10 ist axial verschiebbar innerhalb der Kolbenstange 22 angeordnet und wirkt über ein Schaltgestänge mit einem Schalthebel zusammen (siehe Fig. 1). Der Kolben 36 und die Kolbenstange 22 sind fest miteinander verbunden bzw. als einstückiges Bauteil gefertigt. Die Kolbenstange 22 wirkt mit Mitteln zum Schalten des Zahnräderwechselgetriebes zusammen (siehe Fig. 1). Ein Ventil 56 besteht aus Ventilkolben 40, 48 und Ventilschiebern 38, 46.

Die Ventilkolben 40, 48 sind erfindungsgemäß zweiteilig ausgebildet und bestehen aus einem ersten Ventilkolben 42, 50 und einem zweiten Ventilkolben 44, 52. Lediglich der erste Ventilkolben 42, 50 wirkt mit einem Federelement 58, 60 zur internen Begrenzung der Servounterstützungskraft zusammen. Das Federelement 58, 60 ist hier als Spiralfeder ausgebildet und kann beispielsweise auch vorgespannt in der Servounterstützungseinrichtung 10 angeordnet sein. Der zweite Ventilkolben 44, 52 ist hier topfförmig ausgebildet und an der Steuerstange 20 angeordnet. Der zweite Ventilkolben 44, 52 dient einerseits als Anlagefläche für das Federelement 58, 60 und andererseits als Zylinder für den ersten Ventilkolben 42, 50. Der erste Ventilkolben 42, 50 ist innerhalb des zweiten Ventilkolbens 44, 52 angeordnet. Zur Abdichtung des ersten Ventilkolbens 42, 50 zum zweiten Ventilkolben 44, 52 hin ist hier ein zwischen dem ersten Ventilkolben 42, 50 und dem zweiten Ventilkolben 44, 52 wirkendes Dichtmittel 70, 72 in einer Nut am äußeren Durchmesser des ersten Ventilkolbens 42, 50 angeordnet. Der zweite Ventilkolben 44, 52 ist innerhalb der Kolbenstange 22 angeordnet. Zur Abdichtung des zweiten Ventilkolbens 44, 52 zur Kolbenstange 22 hin ist hier ein zwischen dem zweiten Ventilkolben 44, 52 und der Kolbenstange 22 wirkendes Dichtmittel 74, 76 in einer Nut am äußeren Durchmesser des zweiten Ventilkolbens 44, 52 angeordnet. Der zweite Ventilkolben 44, 52 wird durch ein Anschlagelement 68, 82 und die Federkraft des Federelements 58, 60 auf der Steuerstange 20 derart fixiert, dass er mittels der Steuerstange 20 axial bewegbar ist. Ebenso kann der zweite Ventilkolben 44, 52 fest mit der Steuerstange 20 verbunden sein, beispielsweise über eine Pressverbindung. Das Federelement 58, 60 ist innerhalb des zweiten Ventilkolbens 44, 52 angeordnet und stützt sich einerseits an der Anlagefläche des zweiten Ventilkolbens 44, 52 und andererseits an dem ersten Ventilkolben 42, 50 ab.

Der erste Ventilkolben 42, 50 ist innerhalb des zweiten Ventilkolbens 44, 52 auf der Steuerstange 20 gegen die Federkraft des Federelementes 58, 60 axial verschiebbar angeordnet. In nicht betätigtem Zustand der Servounterstützungseinrichtung 10 wird der erste Ventilkolben 42, 50 durch die Federkraft des Federelements 58, 60 an einen Anschlag 66, 78 der Steuerstange 20 gedrückt. Der Anschlag 66, 78 kann beispielsweise durch einen Sicherungsring realisiert werden, oder einstückig mit der Steuerstange 20 ausgebildet sein. Zwischen den Ventilkolben 40, 48 sind die Ventilschieber 38, 46 ebenfalls axial verschiebbar auf der Steuerstange 20 angeordnet. Die Ventilschieber 38, 46 werden durch ein Federelement 54 axial auseinander gehalten und liegen in nicht betätigtem Zustand der Servounterstützungseinrichtung 10 je an einem Ventilsitz der Kolbenstange 22 an.

Wird die Steuerstange 20 aufgrund einer Handschaltkraft in der Zeichenblattebene nach links bewegt, werden auch die auf der Steuerstange 20 angeordneten Ventilkolben 40, 48 nach links bewegt. Durch den ersten Ventilkolben 42 wird der Ventilschieber 38 betätigt, wodurch sich dieser vom Ventilsitz der Kolbenstange 22 löst und das Ventil 56 öffnet. Durch das geöffnete Ventil 56 wird mittels eines vorhandenen Vorratdrucks ein Servodruck entsprechend zur vorherrschenden Steuerstangenkraft eingeregelt. Dieser Servodruck wirkt auf den Ventilkolben 40, also sowohl auf den ersten Ventilkolben 42 als auch auf den zweiten Ventilkolben 44. Wird nun die Steuerstange 20 durch Erhöhen der Handschaltkraft weiter nach links bewegt, so bleibt der erste Ventilkolben 42 und der Ventilschieber 38 auf Grund des erreichten Kräftegleichgewichts auf ihren zuvor erreichten geöffneten Positionen stehen, während sich die Steuerstange 20 relativ zu diesen beiden weiterbewegt und das Federelement 58 entsprechend komprimiert wird. Dabei stellt sich immer wieder ein neues Kräftegleichgewicht ein, wodurch sich ein entsprechender Verlauf der Servounterstützungskraft ergibt. Durch das Federelement 58 ist somit eine interne Begrenzung der Servounterstützungskraft realisierbar.

Analoges gilt für eine Betätigung der Steuerstange 20 in der Zeichenblattebene nach rechts. Hierbei wird der Ventilschieber 46 durch den ersten Ventilkolben 50 betätigt, wodurch sich der Ventilschieber 46 vom Ventilsitz der Kolbenstange 22 löst und somit das Ventil 56 öffnet.

Die Federelemente 58, 60 können beispielsweise unterschiedliche Federraten aufweisen, wodurch eine unterschiedlich hohe Begrenzung der Servounterstützungskraft in den beiden Betätigungsrichtungen der Steuerstange 20 realisierbar ist, da auf die ersten Ventilkolben 42, 50 unterschiedlich hohe Kräfte wirken.

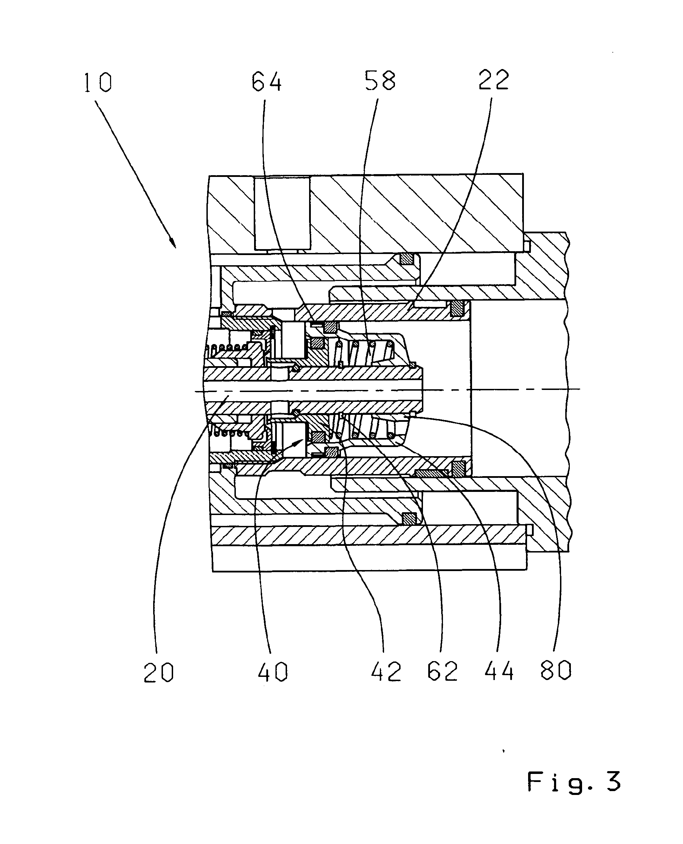

Die Fig. 3 zeigt einen Ausschnitt einer weiteren Ausführungsform der erfindungsgemäßen Servounterstützungseinrichtung 10. Für die aus der Fig. 2 bekannten Bauteile werden hier die gleichen Bezugszeichen verwendet. Im Unterschied zu der in der Fig. 2 beschriebenen Ausführungsform wird hier die axiale Bewegung des ersten Ventilkolbens 42 in Richtung des Federelements 58 mittels eines Anschlagelements 62 begrenzt. Das Anschlagelement 62 ist hier als Sicherungsring ausgebildet, der fest an der Steuerstange 20 angeordnet ist. Wird der geregelte Servodruck nun so groß, dass der erste Ventilkolben 42 gegen die Federkraft des Federelements 58 auf das Anschlagelement 62 gedrückt wird, dann weist die Servokennlinie einen Verlauf auf, welcher einem Servokennlinienverlauf entspricht, bei dem der erste Ventilkolben 42 fest auf der Steuerstange 20 angeordnet ist. Somit kann mit der erfindungsgemäßen Servounterstützungseinrichtung eine gassenabhängige Begrenzung der Servounterstützungskraft realisiert werden. In einer vorteilhaften Ausbildung des zweiten Ventilkolbens 44, kann auch der zweite Ventilkolben 44 als Anschlag zur axialen Wegbegrenzung des ersten Ventilkolbens 42 in Richtung des Federelements 58 dienen. Hierzu kann der zweite Ventilkolben 44 beispielsweise eine Verjüngung seines Innendurchmessers aufweisen, wodurch die axiale Bewegung des ersten Ventilkolbens 42 entsprechend begrenzt wird. Auch ist es denkbar, dass ein Bund 80 des zweiten Ventilkolbens 44 entsprechend länger ausgebildet ist und als Anschlag für den ersten Ventilkolben 42 dient.

Der zweite Ventilkolben 44 weist an seinem äußeren Durchmesser eine Nut auf, in der ein Führungsband 64 angeordnet ist. Das Führungsband 64 dient zur Führung bzw. Abstützung der Steuerstange 20 innerhalb der Kolbenstange 22.

Durch die erfindungsgemäße Servounterstützungseinrichtung 10, bei der der Ventilkolben 40, 48 zweiteilig ausgebildet ist, wirkt der in der Servounterstützungseinrichtung 10 geregelte Servodruck sowohl auf den ersten Ventilkolben 42, 50 als auch auf den zweiten Ventilkolben 44, 52. Der Servodruck wirk somit auf eine große Kolbenfläche, wobei das Federelement 58, 60 zur Begrenzung der Servounterstützungskraft innerhalb der Servounterstützungseinrichtung 10 lediglich auf den ersten, kleineren Ventilkolben 42, 50 wirkt. Somit kann die Federkraft des Federelements 58, 60 entsprechend klein ausgelegt werden, wodurch die Belastung der Bauteile, auf die die Federkraft des Federelements 58, 60 wirkt, wie beispielsweise der erste Ventilkolben 42, 50 und das Anschlagelement 66, 78, entsprechend gering ist. Somit ist durch die erfindungsgemäße Servounterstützungseinrichtung eine interne Begrenzung der Servounterstützungskraft realisierbar, wobei trotz der Verwendung von Ventilkolben 40, 48 mit großen Kolbendurchmessern lediglich kleine Bauteilbelastungen entstehen.

Durch die Verwendung von Ventilkolben mit großen Kolbendurchmessern ist eine Servounterstützungskennlinie erzeugbar, die einen flacheren Verlauf aufweist als eine Kennlinie, die mit kleinen Ventilkolbendurchmessern erzeugbar ist. Somit kann durch die Verwendung von Ventilkolben mit großen Kolbendurchmessern im Vergleich zur Verwendung von Ventilkolben mit kleinen Kolbendurchmessern die einer Handschaltkraft bzw. Steuerstangenkraft zugeordnete Servounterstützungskraft entsprechend verringert werden.

### Bezugszeichen

| | |
|---|---|
| 2 | Schaltanlage |
| 4 | Schalthebel |
| 6 | Schaltstange |
| 8 | Hebelumlenkung |
| 10 | Servounterstützungseinrichtung |
| 11 | Schaltvorrichtung |
| 12 | Anschlussleitung |
| 14 | Vorratsbehälter |
| 16 | Hebel |
| 18 | Hebel |
| 20 | Steuerstange |
| 22 | Kolbenstange |
| 24 | Hebel |
| 26 | Schaltwelle |
| 28 | Hebel |
| 30 | Fahrzeuggetriebe |
| 32 | Schaltschiene |
| 34 | Zylinder |
| 36 | Kolben |
| 38 | Ventilschieber |
| 40 | Ventilkolben |
| 42 | erster Ventilkolben |
| 44 | zweiter Ventilkolben |
| 46 | Ventilschieber |
| 48 | Ventilkolben |
| 50 | erster Ventilkolben |
| 52 | zweiter Ventilkolben |
| 54 | Federelement |
| 56 | Ventil |
| 58 | Federelement |
| 60 | Federelement |
| 62 | Anschlagelement |
| 64 | Führungsband |
| 66 | Anschlag |
| 68 | Anschlagelement |
| 70 | Dichtelement |
| 72 | Dichtelement |
| 74 | Dichtelement |
| 76 | Dichtelement |
| 78 | Anschlag |
| 80 | Bund |
| 82 | Anschlagelement |

## Patentansprüche

1. Servounterstützungseinrichtung (10), umfassend eine Steuerstange (20), auf die eine zu unterstützende Handschaltkraft wirken kann, zwei Ventilkolben (40, 48), die an der Steuerstange (20) angeordnet sind und zwischen denen zwei Ventilschieber (38, 46) auf der Steuerstange (20) axial verschiebbar angeordnet sind, die durch ein Federelement (54) axial auseinander gehalten werden und in nicht betätigtem Zustand der Servounterstützungseinrichtung (10) an je einem Ventilsitz anliegen, **gekennzeichnet durch** zwei Mittel (58, 60) zur Begrenzung der Servounterstützungskraft und weiterhin **dadurch** gekennzeichnet, dass jeder Ventilkolben (40, 48) aus einem ersten Ventilkolben (42, 50) und einem zweiten Ventilkolben (44, 52) besteht, wobei der erste Ventilkolben (42, 50) jeweils einen der beiden Ventilschieber (38, 46) betätigen kann, jeweils mit einem weiteren Federelement (58, 60) als Mittel zur Begrenzung der Servounterstützungskraft zusammenwirkt und jeweils radial dichtend innerhalb des zweiten Ventilkolbens (44, 52) angeordnet ist.

2. Servounterstützungseinrichtung (10) nach Anspruch 1, **dadurch gekennzeichnet, dass** der erste Ventilkolben (42, 50) auf der Steuerstange (20) axial gegen die Federkraft des weiteren Federelements (58, 60) bewegbar ist.

3. Servounterstützungseinrichtung (10) nach Anspruch 1 oder 2, **dadurch gekennzeichnet, dass** die axiale Bewegung des ersten Ventilkolbens (42, 50) in Richtung des weiteren Federelements (58, 60) mittels eines Anschlagelements (62) begrenzbar ist.

4. Servounterstützungseinrichtung (10) nach wenigstens einem der vorangegangenen Ansprüche, **dadurch gekennzeichnet, dass** der zweite Ventilkolben (44, 52) topfförmig ausgebildet ist und einerseits als Anlagefläche für das weitere Federelement (58, 60) und andererseits als Zylinder für den ersten Ventilkolben (42, 50) dient.

5. Servounterstützungseinrichtung (10) nach wenigstens einem der vorangegangenen Ansprüche, **dadurch gekennzeichnet, dass** ein zwischen dem ersten Ventilkolben (42, 50) und dem zweiten Ventilkolben (44, 52) wirkendes
Dichtmittel in einer Nut am äußeren Durchmesser des ersten Ventilkolbens (42, 50) angeordnet ist zur Abdichtung des ersten Ventilkolbens (42, 50) zum zweiten Ventilkolben (44, 52) hin.

6. Servounterstützungseinrichtung (10) nach wenigstens einem der vorangegangenen Ansprüche, **dadurch gekennzeichnet, dass** die Servounterstützungseinrichtung (10) eine Kolbenstange (22) umfasst, welche mit Mitteln zum Schalten eines Zahnräderwechselgetriebes zusammenwirkt.

7. Servounterstützungseinrichtung (10) nach Anspruch 6, **dadurch gekennzeichnet, dass** der zweite Ventilkolben (44, 52) mittels der Steuerstange (20) axial bewegbar ist und radial dichtend innerhalb der Kolbenstange (22) angeordnet ist.

8. Servounterstützungseinrichtung (10) nach wenigstens einem der vorangegangenen Ansprüche 6 oder 7, **dadurch gekennzeichnet, dass** der zweite Ventilkolben (44, 52) an seinem äußeren Durchmesser eine Nut aufweist, in der ein Dichtmittel angeordnet ist zur Abdichtung des zweiten Ventilkolbens (44, 52) zur Kolbenstange (22) hin.

9. Servounterstützungseinrichtung (10) nach wenigstens einem der vorangegangenen Ansprüche 6 bis 8, **dadurch gekennzeichnet, dass** der zweite Ventilkolben (44, 52) an seinem äußeren Durchmesser eine Nut aufweiset, in der ein Führungsband (64) angeordnet ist zur Führung bzw. Abstützung der Steuerstange (20) innerhalb der Kolbenstange (22).

10. Schaltvorrichtung (11) für ein Getriebe (30) eines Kraftfahrzeuges mit einer Servounterstützungseinrichtung (10) nach wenigstens einem der vorangegangenen Ansprüche.

## Claims

1. Power assistance device (10) comprising a control rod (20) on which a manual shift force to be assisted can act, two valve pistons (40, 48) which are arranged on the control rod (20) and between which two valve slides (38, 46) are arranged axially displaceably on the control rod (20), which valve slides are held axially apart from one another by a spring element (54) and, in the non-activated state of the power assistance device (10), rest against in each case a valve seat, **characterized by** two means (58, 60) for restricting the power assistance force and furthermore **characterized in that** each valve piston (40, 48) comprises a first valve piston (42, 50) and a second valve piston (44, 52), wherein the first valve piston (42, 50) in each case can activate one of the two valve slides (38, 46), interacts in each case with a further spring element (58, 60) as means for restricting the power assistance force and is in each case arranged in a radially sealing manner within the second valve piston (44, 52).

2. Power assistance device (10) according to Claim 1, **characterized in that** the first valve piston (42, 50) is axially movable on the control rod (20) counter to the spring force of the further spring element (58, 60) .

3. Power assistance device (10) according to Claim 1 or 2, **characterized in that** the axial movement of the first valve piston (42, 50) can be restricted in the direction of the further spring element (58, 60) by means of a stop element (62).

4. Power assistance device (10) according to at least one of the preceding claims, **characterized in that** the second valve piston (44, 52) is formed pot-shaped and on one hand serves as a bearing surface for the further spring element (58, 60) and on the other hand as a cylinder for the first valve piston (42, 50).

5. Power assistance device (10) according to at least one of the preceding claims, **characterized in that** a sealing means acting between the first valve piston (42, 50) and the second valve piston (44, 52) is arranged in a groove on the outer diameter of the first valve piston (42, 50) for sealing off the first valve piston (42, 50) from the second valve piston (44, 52).

6. Power assistance device (10) according to at least one of the preceding claims, **characterized in that** the power assistance device (10) comprises a piston rod (22) which interacts with means for shifting a gearwheel transmission.

7. Power assistance device (10) according to Claim 6, **characterized in that** the second valve piston (44, 52) is axially movable by means of the control rod (20) and is arranged in a radially sealing manner within the piston rod (22).

8. Power assistance device (10) according to at least one of preceding Claims 6 and 7, **characterized in that** the second valve piston (44, 52) has a groove on its outer diameter, in which groove a sealing means is arranged for sealing off the second valve piston (44, 52) from the piston rod (22).

9. Power assistance device (10) according to at least one of preceding Claims 6 to 8, **characterized in that** the second valve piston (44, 52) has a groove on its outer diameter, in which groove a guide strip (64) is arranged for guiding or supporting the control rod (20) within the piston rod (22).

10. Shift device (11) for a transmission (30) of a motor vehicle with a power assistance device (10) according to at least one of the preceding claims.

## Revendications

1. Système de servo-assistance (10) comprenant une tige de commande (20) sur laquelle peut agir une force de commutation manuelle à assister, deux pistons de soupape (40, 48) qui sont disposés sur la tige de commande (20) et entre lesquels sont disposés de manière à pouvoir coulisser axialement sur la tige de commande (20) deux tiroirs de soupape (38, 46), qui sont maintenus axialement à l'écart l'un de l'autre par un élément de ressort (54) et qui s'appliquent dans l'état non actionné du dispositif de servo-assistance (10) contre un siège de soupape respectif, **caractérisé par** deux moyens (58, 60) pour limiter la force de servo-assistance et **caractérisé en outre en ce que** chaque piston de soupape (40, 48) se compose d'un premier piston de soupape (42, 50) et d'un deuxième piston de soupape (44, 52), le premier piston de soupape (42, 50) pouvant actionner à chaque fois l'un des deux tiroirs de soupape (38, 46), coopérant à chaque fois avec un élément de ressort supplémentaire (58, 60) en tant que moyen pour limiter la force de servo-assistance et étant disposé à chaque fois radialement de manière hermétique à l'intérieur du deuxième piston de soupape (44, 52).

2. Système de servo-assistance (10) selon la revendication 1, **caractérisé en ce que** le premier piston de soupape (42, 50) peut être déplacé axialement sur la tige de commande (20) à l'encontre de la force de ressort de l'élément de ressort supplémentaire (58, 60).

3. Système de servo-assistance (10) selon la revendication 1 ou 2, **caractérisé en ce que** le mouvement axial du premier piston de soupape (42, 50) dans la direction de l'élément de ressort supplémentaire (58, 60) peut être limité au moyen d'un élément de butée (62).

4. Système de servo-assistance (10) selon au moins l'une quelconque des revendications précédentes, **caractérisé en ce que** le deuxième piston de soupape (44, 52) est réalisé en forme de pot et sert d'une part de surface d'appui pour l'élément de ressort supplémentaire (58, 60) et d'autre part de cylindre pour le premier piston de soupape (42, 50).

5. Système de servo-assistance (10) selon au moins l'une quelconque des revendications précédentes, **caractérisé en ce qu'**un moyen d'étanchéité agissant entre le premier piston de soupape (42, 50) et le deuxième piston de soupape (44, 52) est disposé dans une rainure sur le diamètre extérieur du premier piston de soupape (42, 50) pour réaliser l'étanchéité du premier piston de soupape (42, 50) vers le deuxième piston de soupape (44, 52) .

6. Système de servo-assistance (10) selon au moins l'une quelconque des revendications précédentes, **caractérisé en ce que** le dispositif de servo-assistance (10) comprend une tige de piston (22) qui coopère avec des moyens de commutation d'un variateur de vitesses.

7. Système de servo-assistance (10) selon la revendication 6, **caractérisé en ce que** le deuxième piston de soupape (44, 52) peut être déplacé axialement au moyen de la tige de commande (20) et est disposé radialement de manière hermétique à l'intérieur de la tige de piston (22).

8. Système de servo-assistance (10) selon au moins l'une quelconque des revendications précédentes 6 ou 7, **caractérisé en ce que** le deuxième piston de soupape (44, 52) présente sur son diamètre extérieur une rainure dans laquelle est disposé un moyen d'étanchéité pour l'étanchéité du deuxième piston de soupape (44, 52) vers la tige de piston (22).

9. Système de servo-assistance (10) selon au moins l'une quelconque des revendications précédentes 6 à 8, **caractérisé en ce que** le deuxième piston de soupape (44, 52) présente sur son diamètre extérieur une rainure dans laquelle est disposée une bande de guidage (64) pour le guidage ou l'appui de la tige de commande (20) à l'intérieur de la tige de piston (22).

10. Dispositif de commutation (11) pour une boîte de vitesses (30) d'un véhicule automobile comprenant un système de servo-assistance (10) selon au moins l'une quelconque des revendications précédentes.
